# DEMANDE DE BREVET EUROPEEN

(11) **EP 0 560 700 A1**
(43) Date de publication de la demande: **15.09.1993**
(21) Numéro de dépôt: 93420114.6
(22) Date de dépôt: 11.03.1993
(51) Int. Cl.: E04B 2/56, C04B 28/18

(54) **Methode de fabrication de construction ainsi que le matériau principal et le matériau secondaire de construction**

(30) Priorité: 11.03.1992 FR 9203135
(71) Demandeur: Markovic, Stefan, CH-1898 Saint-Gingolph (CH); Markovic, Yolande, née Péquignot, CH-1898 Saint-Gingolph (CH); Nikolic, Vladimir, YU-11030 Belgrad (YU)
(72) Inventeur: Markovic, Stefan, CH-1898 Saint-Gingolph (CH); Markovic, Yolande, née Péquignot, CH-1898 Saint-Gingolph (CH); Nikolic, Vladimir, YU-11030 Belgrad (YU)
(74) Mandataire: Poncet, Jean-François

(57) **Abrégé**

La présente invention concerne la fabrication de maisons d'habitation avec un matériau principal de construction (3) comprenant un mélange de : terre argileuse, non sableuse, non poudreuse, peu grasse, paille d'épeautre ou d'avoine, riche en acide silicique, flocons de papier, chaux.

Ces composants, en se complétant, rendent les matériaux résistants, calfeutrants, isolants, homogènes, thérapeutiques.

## Description

La présente invention concerne la construction d'une maison saine, faite avec des matériaux sains, c'est-à-dire naturels et non modifiés chimiquement.

On connaît déjà depuis longtemps des techniques de réalisation de maisons d'habitation à partir de matériaux naturels tels que l'argile. Ainsi, le document EGGEN C."VAKWERKBOUW IN LIMBURG" 1989, UITGEVERIJ M & P B.V., WEERT, NL décrit des réalisations anciennes de maisons à colombages dans lesquelles une ossature en bois est remplie d'un mélange de paille et d'argile, avec un peu de chaux et de purin ou d'urine. Les proportions indiquées dans ce document mentionnent environ 20 % d'argile. Une telle composition traditionnelle s'avère inadaptée et moins efficace que les matériaux synthétiques modernes pour réaliser un bon compromis entre l'isolation thermique, l'isolation phonique, la résistance mécanique et le coût de production.

Le document FR-A-1 258 891 enseigne une composition permettant de réaliser des éléments de construction en béton léger à structure microporeuse pour isolation thermique et phonique. La composition est basée sur différents minéraux argileux, auxquels on incorpore un ciment ou de la chaux ainsi que des charges et des matières fibreuses organiques ou inorganiques telles que la pâte à papier, la paille hâ- chée, la laine de verre. Dans les exemples indiqués, l'argile est en quantité très faible par rapport aux autres éléments, et elle représente moins de 15 % en poids du mélange sec. Les éléments en béton léger ainsi réalisés ne sont pas adaptés pour constituer par eux-mêmes les structures portantes de murs d'habitation.

En outre, les mélanges proposés par ces techniques connues ne procurent aucun résultat particulièrement favorable sur la santé des occupants d'une maison réalisée à partir de ces mélanges.

Le problème proposé par la présente invention est de concevoir un nouveau matériau de construction permettant la réalisation de maisons d'habitation présentant en elles-mêmes des propriétés particulièrement remarquables pour améliorer la santé des occupants des maisons.

L'invention cherche ainsi à définir un matériau de construction et une structure de maison évitant de rompre l'équilibre existant entre rayonnements cosmiques et telluriques parcourant l'univers, équilibre dans lequel l'homme s'épanouit et dont la rupture peut entraîner des ennuis de santé. Le matériau doit en outre présenter un bon compromis entre les qualités de résistance mécanique, d'isolation phonique, d'isolation thermique, et il doit pouvoir être produit à faible coût.

Pour cela, le matériau principal de construction selon l'invention comprend un mélange de terre argileuse, de chaux, de paille d'épeautre ou d'avoine, de flocons de papier et d'eau.

Un tel matériau principal s'avère avoir un rôle thérapeutique sur les occupants d'une maison bâtie avec ce matériau. Outre les effets du mélange d'argile et de chaux, mélange naturel et traditionnellement sain, on pense que les effets bénéfiques d'un tel matériau principal sont considérablement amplifiés par la présence de paille d'épeautre ou d'avoine, qui sont des céréales à haute teneur en acide silicique.

Les composants du mélange formant le matériau principal de construction, sont choisis pour leurs propriétés respectives et leur aptitude à réaliser un mélange approprié pour remplir les fonctions recherchées :
- composant 1 : les flocons de papier, recyclé ou non, sont un bon isolant thermique et phonique, et participent à la solution du problème de condensation dans la maison ; de préférence, ils doivent être préalablement traités aux sels de Bore, ce traitement leur conférant une résistance améliorée aux champignons et à la combustion ;
- composant 2 : la chaux, connue pour son pouvoir hydraulique, augmente la cohésion des composants et présente un pouvoir désinfectant ;
- composant 3 : la paille d'épeautre ou d'avoine a le rôle de bien lier et donc de servir d'armature, le rôle d'aérer et d'alléger le matériau principal de construction, et aussi un effet thérapeutique sur les occupants de la maison ;
- composant 4 : l'argile ou terre argileuse est un isolant thermique, phonique et un régulateur d'humidité ;
- composant 5 : l'eau rend la matière facile à travailler.

On doit préférer :
- l'emploi d'une argile non sableuse qui, dans le cas contraire, provoque des fissures,
- l'emploi d'une argile non poudreuse qui, dans le cas contraire, s'effrite,
- l'emploi d'une argile pas trop grasse qui, dans le cas contraire, empêche la maison de respirer.

Tous ces composants du matériau principal, parce qu'ils se complètent, donnent un mélange homogène dans lequel les quatre composants 1, 2, 3, 4 interviennent. Le mélange est plus aéré et léger, plus résistant, calfeutrant, en particuliergrâce aux composants 1 et 3.

Certaines parties de la maison peuvent avantageusement être réalisées en un matériau secondaire, mélange de chaux, de sable et de fibres de coco, mélange dans lequel la chaux augmente la cohésion des composants.

L'épeautre est la céréale la plus saine ; elle contient la plus haute teneur en acide silicique de toutes les céréales : on pense que, grâce à sa texture naturelle particulière, l'acide silicique rayonne sur la peau, la traverse même et engendre des résultats étonnants. Cela expliquerait le rôle de l'épeautre : stimulation de l'irrigation sanguine, énergie vitale accrue, résistance de l'organisme contre maladies physiques et problèmes psychiques, ralentissement du processus de vieillissement. L'épeautre a un rôle de protection contre les courants telluriques. L'acide silicique est une des plus importantes substances minérales pour l'être humain ; aucun tissu humain n'est exempt d'acide silicique ; la carence en acide silicique cause de multiples maux.

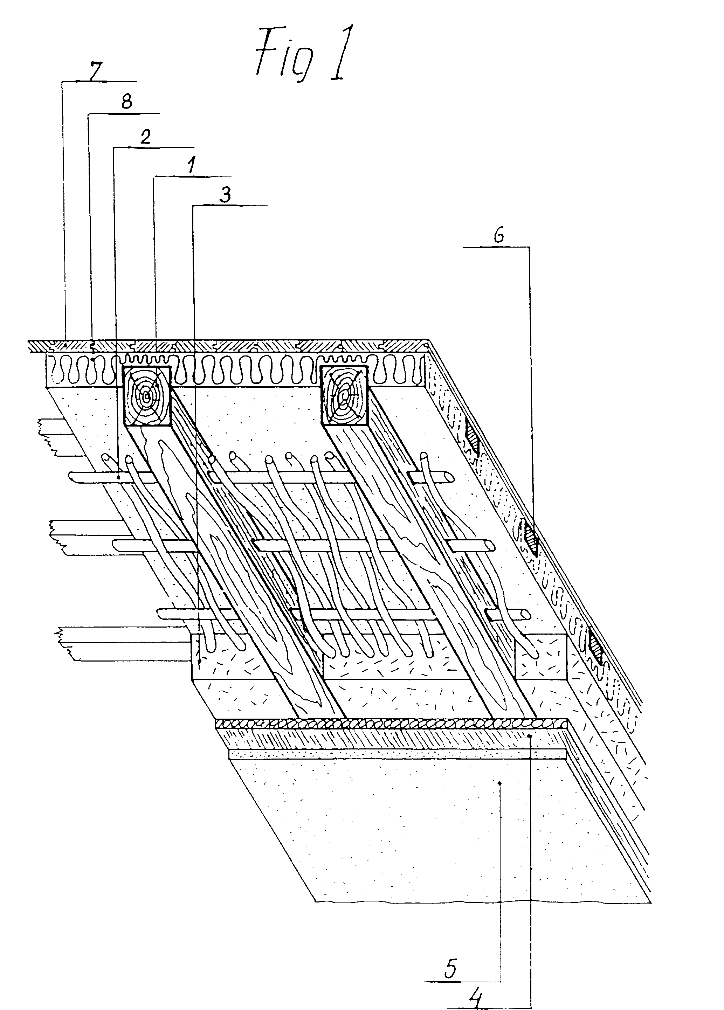

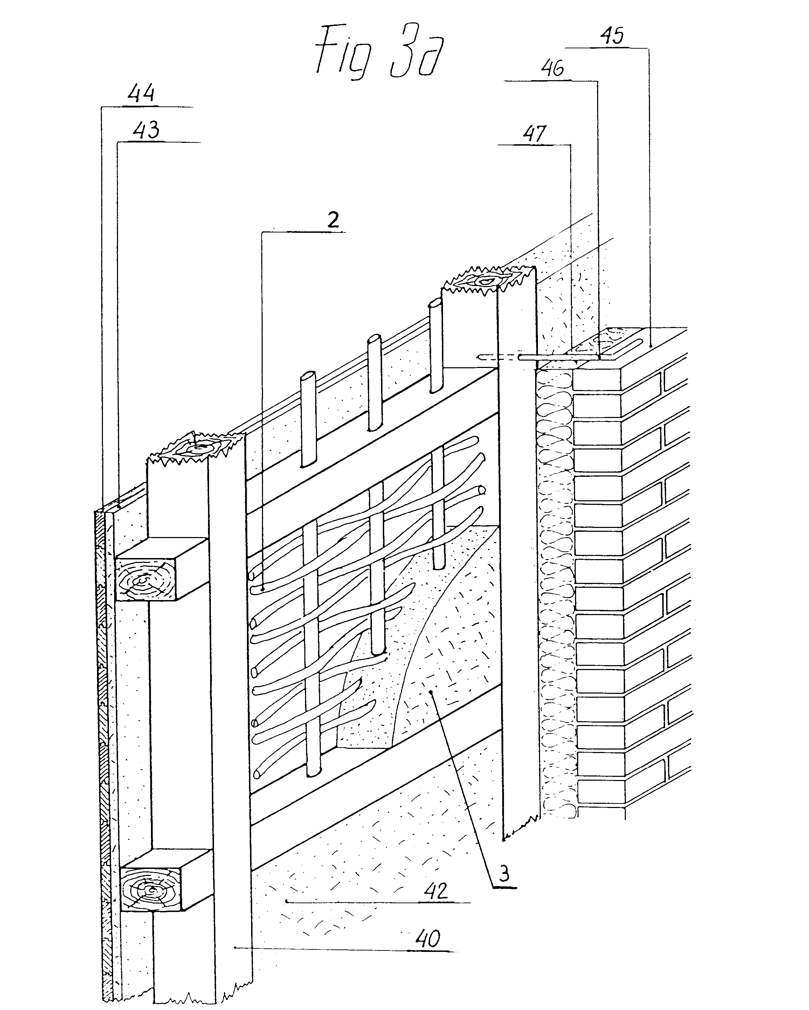

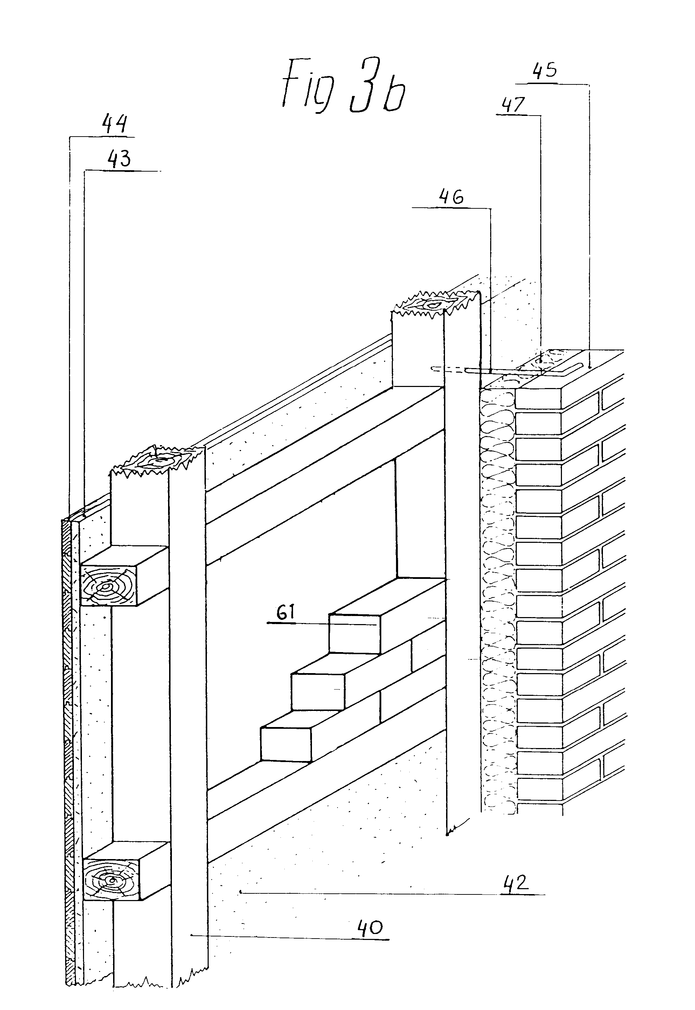

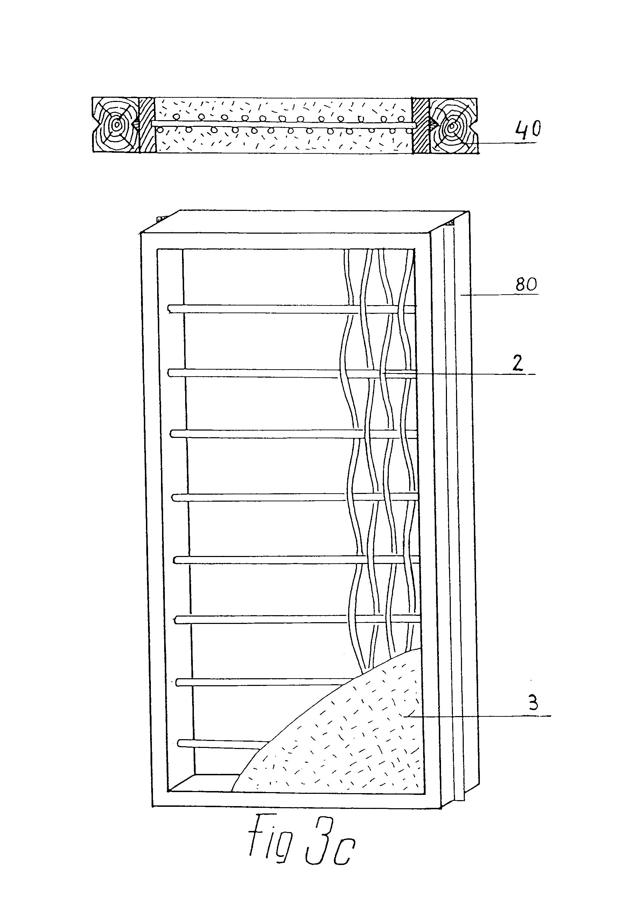

La mise en oeuvre des matériaux pour réaliser une maison selon l'invention est particulière à chaque partie de la construction : mur, dalle, toit. La méthode emploie l'un des deux matériaux précités ou les deux, comme illustré sur les figures 1, 2, 3a, 3b, 3c. Dans le mode de réalisation des figures 1, 2 et 3a, le matériau principal est coulé sur le lieu. Dans le mode de réalisation de la figure 3b, le matériau principal se présente sous forme de briques non cuites qui sont maçonnées sur le lieu. Dans le mode de réalisation de la figure 3c, le matériau principal est incorporé dans des panneaux contenant des grilles de bois. Les panneaux peuvent être préfabriqués et assemblés sur le lieu, comme illustré sur la figure 3b.

Avec ces deux matériaux et avec cette méthode de fabrication de construction, il est possible d'envisager la construction de grands bâtiments.

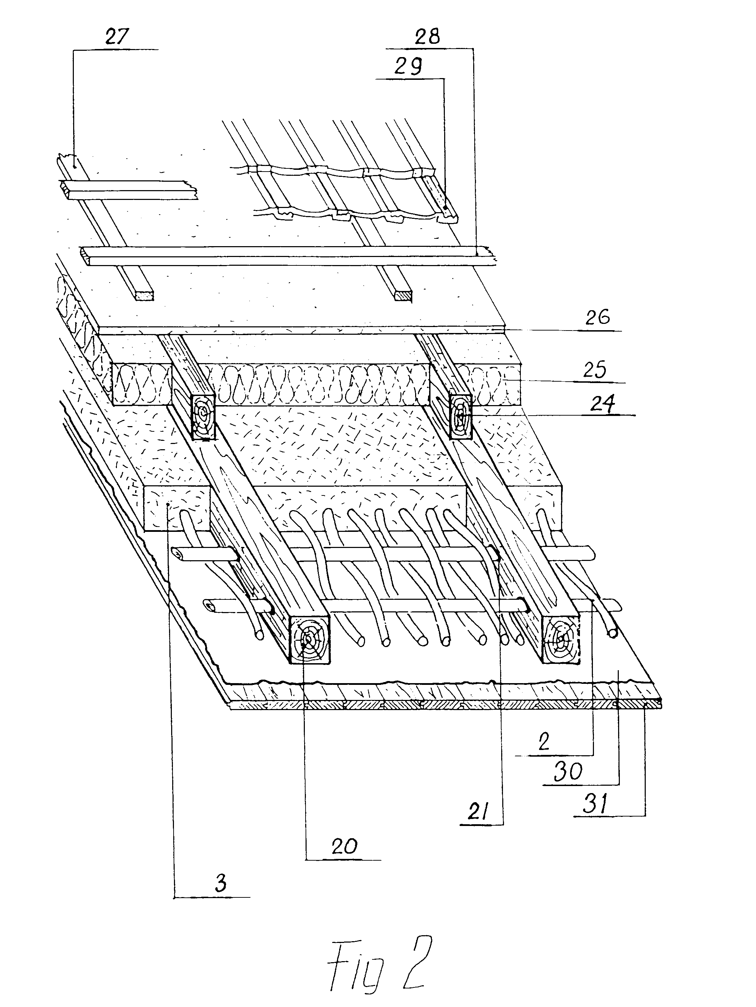

Dans la construction de la présente invention, il est important de concevoir un espace d'air entre la partie intérieure du mur faite du matériau principal et la partie extérieure du mur faite de briques cuites ou autres matériaux de rhabillage naturel. L'espace d'air est laissé tel quel ou est rempli d'une isolation naturelle, comme illustré sur les figures 3a et 3b. L'espace d'air est utilisé aussi dans la conception du toit, de la dalle, comme illustré sur la figure 2. Cette conception utilisant l'espace d'air et le ou les matériaux précités constitue une particularité supplémentaire, parce qu'elle permet de diminuer l'épaisseur du muren augmentant le coefficient d'isolation thermique ; il en résulte un coût de fabrication diminué et surtout une économie d'énergie réalisée grâce à l'espace d'air employé dans les différentes parties de la construction.

Dans la présente invention, tous les matériaux de construction utilisés sont :
- soit constitués uniquement de substances du règne végétal ou minéral, donc facilement renouvelables ;
- soit élaborés à partir de matières naturelles (chaux, papier de préférence recyclé) qui sont transformées par des méthodes de transformation imitées de la nature.

Des pièces de bois forment l'ossature des murs, du toit, des dalles.

La figure 1 représente l'entresol ou la dalle dans une maison selon la présente invention. La structure porteuse est faite de solives 1 en bois sain ; entre les solives se trouvent fixées des grilles de bois 2 coulées dans une couche épaisse que forme le matériau principal 3 constitué proportionnellement de terre argileuse (1 m³), de chaux (entre 35 et 100 kg, avantageusement environ 50 kg), de paille d'épeautre ou d'avoine (entre 20 et 50 kg, avantageusement environ 30 kg), de flocons de papier (entre 6 et 25 kg, avantageusement environ 12,5 kg) et d'eau nécessaire pour rendre la masse homogène. Sous les solives, sont clouées des grilles de roseaux 4 enduites de mortier fait proportionnellement : de chaux (1 proportion), de sable (3 proportions) et de fibres de coco 5 (7 kg coco/m³). Sur les solives, sont clouées les poutrelles 6, lesquelles portent le plancher 7 ; entre la couche 3 et le plancher 7, il existe un espace dans lequel est insufflée une isolation 8 de flocons de papier, recyclé ou non.

La figure 3a représente les murs fabriqués sur place, variante a). Les murs sont constitués de : une charpente en bois 40 qui a un rôle antisismique ; entre les éléments de la charpente, sont fixées des grilles de bois 2 sur lesquelles est coulé le matériau principal 3 constitué du mélange de terre argileuse, chaux, paille d'épeautre ou d'avoine, flocons de papier, eau ; ainsi on obtient un mur porteur 42 ; sur la face intérieure du mur porteur, sontappliquées des plaques de cellulose 43 comprimée, ensuite rhabillées avec un matériau naturel 44, par exemple des lambris de bois ou un crépi de finition ou une tapisserie. Entre le mur porteur et le rhabillage extérieur 45 fait de matériaux naturels (par exemple de briques) fixé au mur porteur par des crochets 46, il existe un espace d'air 47 qui peut être laissé tel quel ou rempli d'une isolation saine.

La figure 3b représente les murs fabriqués sur place, variante b). Les murs sont constitués d'une charpente de bois 40 qui a un rôle antisismique : entre les éléments de la charpente, les parties vides sont maçonnées avec des briques 61 non cuites préfabriquées avec le matériau principal constitué du mélange de terre argileuse, chaux, paille d'épeautre ou d'avoine, flocons de papier et eau ; ainsi on obtient un mur porteur 42.

Sur la face intérieure du mur porteur, sont appliquées des plaques de cellulose 43 comprimée, ensuite rhabillées avec un matériau naturel 44. Entre le mur porteur et le rhabillage extérieur 45 fait de matériaux naturels, fixé au mur porteur par des crochets 46, il existe un espace d'air 47 qui peut être rempli d'une isolation saine.

La figure 3c représente des murs fabriqués comme dans la figure 3a avec pour avantage : l'espace entre les éléments de la charpente 40 peut être garni avec des pièces préfabriquées sous forme de panneaux qui sont faites de cadres de bois 80 contenant des grilles de bois 2 sur lesquelles est coulé le matériau principal 3 constitué du mélange de terre argileuse, chaux, paille d'épeautre ou d'avoine, flocons de papier et eau.

La figure 2 représente le toit d'une maison selon la présente invention. Sur les parties latérales des chevrons de bois 20, sont faites des entailles 21, permettant de fixer des grilles de bois 2, sur lesquelles est appliquée une couche épaisse de matériau principal 3 constitué du mélange de terre argileuse, chaux, paille d'épeautre ou d'avoine, flocons de papier et eau.

Sur les chevrons sont fixées des poutrelles 24 entre lesquelles existe un espace d'air 25 qui peut être rempli avec une isolation naturelle.

Sur les poutrelles, sont fixées des plaques de cellulose 26 comprimée, étanches à l'eau ; sur ces plaques, sont posées des contre-lattes 27 et lattes 28, lesquelles supportent la couverture 29.

Sous les chevrons, est appliqué du papier pare- vent 30 qui empêche la pénétration des poussières provenant de la couche de matériau principal 3.

La finition 31 est faite avec un matériau naturel, par exemple en lambris.

## Revendications

1 - Matériau de construction pour la réalisation de maisons d'habitation, caractérisé en ce qu'il comprend un mélange de terre argileuse, de chaux, de paille d'épeautre ou d'avoine, de flocons de papier et d'eau.

2 - Matériau selon la revendication 1, caractérisé en ce que les proportions des constituants sont de 1 m³ de terre argileuse pour 35 à 100 kg de chaux, pour 20 à 50 kg de paille d'épeautre ou d'avoine et pour 6 à 25 kg de flocons de papier.

3 - Matériau selon l'une des revendications 1 ou 2, caractérisé en ce que, dans le mélange, la terre argileuse est non sableuse, non poudreuse et pas trop grasse.

4 - Matériau selon l'une quelconque des revendications 1 à 3, caractérisé en ce que les flocons de papier sont préalablement traités aux sels de Bore.

5 - Maison construite en utilisant un matériau (3) selon l'une quelconque des revendications 1 à 4, dans laquelle des pièces de bois (40) forment une ossature dont les espaces sont remplis avec ledit matériau (3).

6 - Maison selon la revendication 5, caractérisée en ce que ledit matériau (3) est armé par des grilles de bois (2).

7 - Maison selon l'une des revendications 5 ou 6, caractérisée en ce que ledit matériau (3) est sous forme d'éléments préfabriqués non cuits assemblés sur le site, tels que des briques (61) ou des panneaux (80).

8 - Maison selon l'une quelconque des revendications 5 à 7, caractérisée en ce que :

- ledit matériau (3) forme un mur porteur (42),
- sur la face intérieure du mur porteur sont appliquées des plaques de cellulose (43) comprimée recouvertes d'un rhabillage intérieur (44),
- à l'extérieur du mur porteur est disposé un rhabillage extérieur (45) fait de matériau naturel, séparé du mur porteur par un espace d'air (47) ou une isolation saine.

9 - Maison selon l'une quelconque des revendications 5 à 8, caractérisée en ce qu'elle comprend un entresol ou dalle dont la structure porteuse comprend des solives en bois (1) entre lesquelles est coulé ledit matériau (3) armé par des grilles de bois (2), des grilles de roseaux (4) étant clouées sous les solives (1) et enduites d'un mortier comprenant une proportion de chaux pour trois proportions de sable, et comprenant 7 kg/m³ de fibres de coco.

10 - Procédé de construction d'une maison selon l'une quelconque des revendications 5 à 9 avec un matériau selon l'une quelconque des revendications 1 à 4, caractérisé en ce que :
- on réalise une ossature en bois (40),
- entre les éléments de l'ossature en bois, on fixe des grilles de bois (2),
- on coule ledit matériau (3) sur les grilles de bois (2),
- on recouvre la face intérieure du mur porteur ainsi réalisé avec des plaques de cellulose (43) comprimée et un rhabillage intérieur (44) en matériau naturel,
- on recouvre la face extérieure du mur porteur avec un rhabillage extérieur (45) fait de matériau naturel, en laissant un espace d'air (47) entre le mur porteur et le rhabillage extérieur (45).
